(19) Europäisches Patentamt
European Patent Office
Office européen des brevets

(11) EP 4 733 577 A1

(12) **EUROPEAN PATENT APPLICATION**

(43) Date of publication:
29.04.2026 Bulletin 2026/18

(21) Application number: 24209037.1

(22) Date of filing: 25.10.2024

(51) International Patent Classification (IPC):
**F03D 7/02** (2006.01)

(52) Cooperative Patent Classification (CPC):
**F03D 7/0264; F03D 7/0224; F03D 7/0276;**
F03D 17/029; F05B 2270/1011; F05B 2270/107;
F05B 2270/327

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nordex Energy SE & Co. KG**
**22419 Hamburg (DE)**

(72) Inventors:
• **Frommann, Johannes**
**22419 Hamburg (DE)**
• **Georg, Torsten**
**22419 Hamburg (DE)**
• **Harms, Ulrich**
**22419 Hamburg (DE)**
• **Dinglinger, Julia**
**22419 Hamburg (DE)**

(74) Representative: **Völkl Siebenson Patentanwälte -
Partnerschaft mbB
Baaderstraße 13
80469 München (DE)**

(54) **METHOD FOR OPERATING A WIND TURBINE AND WIND TURBINE**

(57) A method for operating a wind turbine (100) is specified, wherein the wind turbine has a rotor (10) with at least one rotor blade (1, 2, 3). The wind turbine is operable in a safety operation mode which is configured to slow down the rotation of the rotor. In the method, first information (I1) is representative of the operation mode in which the wind turbine is to be operated. The method comprises a step in which it is determined whether a first condition (C1) is fulfilled. The first condition comprises that a failure appears in the wind turbine during rotation of the rotor. If the first condition is fulfilled, second information (I2) is provided which is representative of the actual rotational speed of the rotor. Furthermore, third informa-

tion (I3) is provided which is representative of the maximum allowable rotational speed of the rotor. Moreover, it is determined whether a second condition (C2) is fulfilled depending on the second and the third information. The second condition comprises that the actual rotational speed is at most the maximum allowable rotational speed. If the second condition is fulfilled, the first information is determined to be representative of the safety operation mode.

Furthermore, a computer, a computer program, a computer-readable data carrier, a control device and a wind turbine are specified.

Fig. 4

## Description

The present disclosure relates to a method for operating a wind turbine. Furthermore, the disclosure relates to a computer program, a computer-readable data carrier, a control device and a wind turbine.

Wind turbines are widely known and are used to convert wind energy into electrical energy. In case of a failure in the wind turbine, e.g. in the pitch adjustment system thereof, it might be necessary to stop the wind turbine.

One object to be achieved is to provide a method which contributes to a safe and efficient operation of the wind turbine, particularly in the case of a failure in the pitch adjustment system. Further objects to be achieved are to provide a computer program, a computer-readable data carrier, a control device and a wind turbine for executing such a method.

First, the method for operating a wind turbine is specified.

According to an embodiment, the method for operating a wind turbine is for a wind turbine which has a rotor with at least one rotor blade. The wind turbine is operable in a safety operation mode which is configured to slow down the rotation of the rotor, particularly until a stop of the rotation of the rotor. In the method, first information is representative of the operation mode in which the wind turbine is to be operated. The method comprises a step in which it is determined whether a first condition is fulfilled. The first condition comprises that a failure appears in the wind turbine during rotation of the rotor. If the first condition is fulfilled, second information is provided which is representative of the actual rotational speed of the rotor. Furthermore, third information is provided which is representative of the maximum allowable rotational speed of the rotor. Moreover, it is determined whether a second condition is fulfilled depending on the second and the third information. The second condition comprises that the actual rotational speed is at most the maximum allowable rotational speed. If the second condition is fulfilled, the first information is determined to be representative of the safety operation mode.

When a failure appears in a wind turbine, e.g. in the pitch adjustment system thereof, the wind turbine is usually shut down in order to avoid damage or dangerous situations. An example for such a failure is a blade stuck event, in which one rotor blade is stuck or impaired in its mobility.

In order to slow down or stop the wind turbine, different safety operation modes may be available. Different safety operation modes differ from each other, for example, in terms of operation strategies in order to slow down and stop the wind turbine. Some of them may be more gentle and some of them may be more aggressive. Aggressive safety operation modes may result in a fast slowdown but can induce heavy loads on the wind turbine. Thus, in order to keep the load on the wind turbine small during the slowdown, a gentle safety operation mode may be preferred. However, it has to be guaranteed that the selected gentle safety operation mode indeed results in a sufficiently fast slowdown and, optionally, in stop of the rotation of the rotor. If this is not the case, a more aggressive safety operation mode should be used.

The present disclosure provides, inter alia, a method which helps to find the proper safety operation mode. In the method, the safety operation mode is selected depending on whether the actual rotational speed of the rotor is below a maximum allowable rotational speed. Only if this is the case, it is assumed that the slowdown of the rotor rotation is sufficiently fast so that the operation of the wind turbine can be continued in the selected safety operation mode. Thus, the method enables, inter alia, to find a good compromise between fast slowdown and the avoidance of heavy loads on the wind turbine.

The method specified herein is, in particular, a computer implemented method, i.e. is performed with the help of a computer or a processor. For example, the method is executable by a control device of the wind turbine, such as a main controller of the wind turbine, also called turbine controller, or by a safety controller or by both.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively. Furthermore, here and in the following, information is, in particular, electronic information, like electronic data.

During operation of the wind turbine and, particularly during execution of the method specified herein, first information is representative of the operation mode in which the wind turbine is to be operated. When the wind turbine is operated according to the first information, it is operated in the operation mode of the first information. Accordingly, when the operation mode, for which the first information is representative, changes, the operation of the wind turbine changes.

At the beginning of the method, e.g. before a failure appears in the wind turbine, the first information may be representative of a nominal operation mode. This nominal operation mode may be a mode optimized with respect to energy production.

The first condition comprises that a failure appears in the wind turbine during rotation of the rotor. That is, the appearance of a failure is necessary and might even be sufficient for the first condition to be fulfilled. The failure may be a failure in any component of the wind turbine, particularly in the pitch adjustment system of the wind turbine. Detection of the failure may happen automatically.

At least in the case that the first condition is fulfilled, further steps are executed. One of these steps is the provision of the second information. The second information may be determined depending on measurements. For example, the wind turbine comprises an incremental encoder for determining the actual rotational speed of the rotor.

Another step of these steps is the provision of the third information. The maximum allowable rotational speed of the third information may be predetermined or may be determined during execution of the method. By way of example, when the third information is initially provided, i.e. provided for the first time after the start of the method or after the detection of the failure in the wind turbine, the maximum allowable rotational speed is set to be the actual rotational speed of the second information plus an offset value.

The second condition comprises that the actual rotational speed is smaller than or equal to the maximum allowable rotational speed. This means that the fact that the actual rotational speed is at most the maximum allowable rotational speed is necessary and might even be sufficient for the second condition to be fulfilled.

If, particularly only if, the second condition is fulfilled, the first information is determined to be representative of the safety operation mode. The safety operation mode is a mode in which the rotation of the rotor is slowed down, particularly up to a stop of the rotation. Either the first information is then changed to be representative of the safety operation mode or the first information is continued to be representative of the safety operation mode. The safety operation mode is, in particular, a gentle safety operation mode. It can be a waiting safety operation mode which is waiting until it has to react with another safety operation mode. Since there may be more than one safety operation mode, the safety operation mode which is chosen if the first and the second condition are fulfilled is herein also referred to as the "first safety operation mode".

According to a further embodiment, if the first condition and the second condition are fulfilled, the method further comprises the step of newly providing or determining the third information such that it is representative of a maximum allowable rotational speed which is different from the previous maximum allowable rotational speed. For example, at least when the third information is newly determined for the first time after the start of the method or after the detection of a failure, respectively, the third information is determined such that it is representative of a maximum allowable rotational speed which is smaller than the previous maximum allowable rotational speed.

According to a further embodiment, if the first condition and the second condition are fulfilled, the method further comprises the step of newly providing or determining the second information. For this purpose, the actual rotational speed may be measured again.

According to a further embodiment, the method comprises a step of determining whether the second condition is fulfilled depending on the newly determined second and the newly determined third information. In other words, it is checked whether the newly determined second information and the newly determined third information fulfill the second condition.

According to a further embodiment, the steps of newly determining the second and newly determining the third information are repeated as long as the first condition and second condition are fulfilled and until the second information becomes representative of a stop of the rotor rotation. This means, each time the current second information and the current third information indicate that the actual rotational speed is still below the maximum allowable rotational speed, the second information and the third information are newly determined, and, with this, the second condition is checked again and so on. In other words, the second and third information are repeatedly provided or determined and, based on this, it is repeatedly checked whether the second condition is still fulfilled. This, however, is only done as long as the rotor is actually rotating. When the rotation of the rotor has stopped, the method is ended, for example.

The second and third information which are used to determine whether the second condition is fulfilled always correspond to each other with respect to time. Particularly, the third information is representative of the maximum allowable rotational speed which the rotor is allowed to have at a certain moment in time, and the corresponding second information is representative of the actual rotational speed at this certain moment in time. By way of example, the time interval $\Delta t$ from determining the second and the third information to newly determining the second and the third information, i.e. the length between two certain moments in time, is below 1 second, e.g. below 500 ms, e.g. about 100 ms.

According to a further embodiment, if the second condition and a third condition are fulfilled, the third information is newly determined such that the maximum allowable rotational speed is smaller than the previous maximum allowable rotational speed. For example, the maximum allowable rotational speed is changed by a value of at least 0.0001 rpm and at most 0.01 rpm, e.g. of 0.001 rpm, each time the third information is newly determined. For instance, as long as the first, the second and the third condition are fulfilled, the maximum allowable rotational speed decreases with a change rate $\frac{dn}{dt}$ between 0.01 rpm/s and 1 rpm/s, e.g. of 0.1 rpm/s. The decrease may be monotonously or continuously. The change rate or slope $\frac{dn}{dt}$ may be constant.

According to a further embodiment, the third condition comprises that the second and the third information are representative of the actual rotational speed being larger than a reference rotational speed. The reference rotational speed is smaller than the maximum allowable rotational speed. The reference rotational speed may be extractable from the third information, i.e. the third information is additionally representative of the reference rotational speed.

The reference rotational speed is, for example, the maximum allowable rotational speed minus an offset value. The offset value may be a predetermined value, particularly a constant value. By way of example, the offset value is about 10% of the nominal rotational speed. The nominal rotational speed may be about 10 rpm. The offset value may be the same offset value as specified above with respect to initially providing the third information. With the reference rotational speed being the maximum allowable rotational speed minus a constant offset value, the reference rotational speed has the same slope as the maximum allowable rotational speed. Particularly, determining whether the third condition is fulfilled may be done depending on the second and the third information.

According to a further embodiment, if the second condition is fulfilled and the third condition is not fulfilled, the third information is newly determined such that the maximum allowable rotational speed is the actual rotational speed plus an offset value. This offset value may be the same offset value as specified above which is subtracted from the maximum allowable rotational speed in order to determine the reference rotational speed.

The procedure of setting the maximum allowable rotational speed to the actual rotational speed plus an offset value in the case that the third condition is not fulfilled is herein called "fast follow". It is a procedure in which the maximum allowable rotational speed does, for example, not have a constant slope but, instead, follows the actual rotational speed in the case that the actual rotational speed decreases faster than expected. This means that also the maximum allowable rotational speed decreases faster. This is particularly useful for the case that, after the fast decrease of the actual rotational speed, the actual rotational speed increases again. If one would not have used the fast follow procedure for the maximum allowable rotational speed, the maximum allowable rotational speed would be much higher at the moment when the actual rotational speed starts to increase again. Accordingly, the actual rotational speed would then be allowed to increase much more. This might lead to a dangerous situation.

When using the fast follow procedure, the reference rotational speed is determined to follow the same shape as the maximum allowable rotational speed, for example. Particularly, the reference rotational speed is determined as described above, i.e. it is the maximum allowable rotational speed minus the offset value.

According to a further embodiment, the wind turbine is at least operable in a further safety operation mode, herein also referred to as "second safety operation mode". The further safety operation mode is also an operation mode which is configured to slow down the rotation of the rotor, particularly until a stop of the rotation of the rotor. The further safety operation mode may, however, be more aggressive than the first safety operation mode. Particularly, the second safety operation mode is configured to stop rotation of the rotor as fast as possible.

According to a further embodiment, if the first condition is fulfilled and the second condition is not fulfilled, the first information is determined to be representative of the further safety operation mode. Accordingly, when the wind turbine is operated according to the first information, it is then operated in the further safety operation mode.

According to a further embodiment, the safety operation mode and the further safety operation mode use different measures or a different combination of measures for slowing down the rotation of the rotor. By way of example, when the wind turbine is operated according to the first safety operation mode, slowing down the rotor rotation is achieved with the help of increasing pitch angles of the rotor blades, e.g. up to the feathering positions, and with the help of changing the generator torque applied to a generator of the wind turbine. On the other hand, if the wind turbine is operated in the second safety operation mode, slowing down of the wind turbine may be done using both increasing the pitch angles and the changing the generator torque or solely with the help of increasing the pitch angles of the rotor blades, e.g. up to the feathering positions. Particularly, in the first safety operation mode, the pitch angles of the rotor blades are increased by considering a potential aerodynamic imbalance in the rotor while, in the second safety operation mode, changing the pitch angles of the rotor blades may be done irrespectively of an aerodynamic imbalance in the rotor. Additionally or alternatively, in the first safety operation mode, the generator torque may be increased more than in the second safety operation mode. For example, in the first safety operation mode the maximum allowable value(s) of the generator torque are larger than in the second safety operation mode.

According to a further embodiment, once the first information has been determined to be representative of the safety operation mode or the further safety operation mode, the first information is maintained to be representative of the safety operation mode or the further safety operation mode until rotation of the rotor is stopped, e.g. until second information is representative of the actual rotational speed to be zero. "Stop of rotation" herein means, in particular, that rotation is negligible. For example, once the first information is determined to be representative of the further safety operation mode, it is not changed anymore until the rotor is stopped.

According to a further embodiment, the wind turbine comprises at least two rotor blades. For example, the wind turbine comprises three rotor blades.

According to a further embodiment, the wind turbine comprises a pitch adjustment system for adjusting the pitch angles of the at least two rotor blades. For example, the pitch adjustment system comprises, for each rotor blade of the rotor, a pitch bearing for movably supporting the rotor blade and a pitch drive for driving the movement of the rotor blade around the pitch bearing axis. The pitch drives may be electromechanical or hydraulic drives. For example, the pitch drives comprise electric motors. For example, in addition to the pitch bearings and the pitch drives, the pitch adjustment system comprises a control device, e.g. a so-called "pitch controller", which controls the pitch drives so that the pitch angles of the at least two rotor blades are brought to pitch angle setpoints. In another example, the pitch adjustment system comprises an individual pitch bearing, an individual pitch drive and an individual control device for each rotor blade of the rotor. The pitch adjustment system may be configured to adjust the pitch angles of all rotor blades individually, so-called "individual pitch control", IPC for short, or may only be able to adjust the pitch angles of all rotor blades collectively, so-called "collective pitch control", CPC for short.

According to a further embodiment, the failure in the wind turbine is a fault event in the pitch adjustment system in which at least one of the rotor blades is hindered or impaired in its mobility (in the following called "impaired rotor blade") and at least one other rotor blade is still movable as intended (in the following called "movable-as-intended rotor blade"). In other words, the fault event is an event in which at least one but not all rotor blades are hindered in its mobility and at least one rotor blade but not all rotor blades is still working correctly. That the rotor blade is hindered in its mobility can mean that the rotor blade is stuck, e.g. cannot be moved around its pitch bearing axis anymore, or that it can only be moved much more slowly than intended. Examples of fault events in which the mobility of the rotor blade is hindered or impaired may be a damage or malfunction of one or more of a pitch bearing, a pitch drive and a pitch controller.

According to a further embodiment, the method comprises the step of determining fourth information, wherein the fourth information is representative of a pitch angle setpoint. The pitch angle setpoint is for the at least one movable-as-intended rotor blade and is chosen to reduce the rotational speed of the rotor. For example, the pitch angle setpoint is increasing with time and/or increases towards the feathering position. The pitch angle setpoint may be the same for all movable-as-intended rotor blades.

A setpoint herein defines a certain target to be achieved when operating the wind turbine. For example, the pitch angle setpoint is the target value of the pitch angle of the rotor blade. The realization of the pitch angle to become the pitch angle setpoint can be done with help of a controller, e.g. in a closed feedback loop.

According to a further embodiment, the fourth information is determined such that, when the wind turbine is operated according to the fourth information, a pitch angle of at least one movable-as-intended rotor blade is adjusted to the pitch angle setpoint. In other words, the fourth information is an operation information for the wind turbine or for the pitch adjustment system, respectively, and is configured to cause an operation of the wind turbine or the pitch adjustment system such that the pitch angle of the at least one movable-as-intended rotor blade is brought to the pitch angle setpoint.

According to a further embodiment, if the second condition is fulfilled, the fourth information is determined depending on the second information such that the difference between the pitch angle setpoint and the pitch angle of the at least one impaired rotor blade is lower or equal to a maximum allowable pitch angle difference. The maximum allowable pitch angle difference depends on the actual rotational speed.

For example, the maximum allowable pitch angle difference decreases with increasing actual rotational speed of the rotor. The pitch angle setpoint is chosen such that the difference between the pitch angle setpoint and the pitch angle of the at least one impaired rotor blade follows or equals the maximum allowable pitch angle difference as a function of the actual rotational speed.

Indeed, in the case of an impaired rotor blade, the movement of the at least one movable-as-intended rotor blade towards the feathering position causes a large difference between the pitch angles of the rotor blades. This, however, creates the above-mentioned aerodynamic imbalances which might harm, for example, the yaw system. By defining the maximum allowable pitch angle difference depending on the rotational speed of the rotor, the imbalance can be kept in an acceptable range. For example, in order to determine the fourth information or the pitch angle setpoint for the at least one movable-as-intended rotor blade, a lookup table is used. The lookup table may have been generated offline by postprocessing of simulations with static wind speeds, rotor speeds and pitch angles, so-called rotor maps. In another example, the determination of the fourth information or the pitch angle setpoint for the at least one movable-as-intended rotor blade, is performed in real-time based on load calculations, wherein the load calculations comprise calculating in real-time the loads acting on the wind turbine components based on current sensor data.

The fourth information may also be representative of the pitch angle setpoint of the at least one impaired rotor blade. For example, the pitch angle setpoint for the at least one impaired rotor blade is equal to the pitch angle setpoint for the at least one movable-as-intended rotor blade or the same pitch angle setpoint is used. This has the advantage that, if the failure disappears, e.g. the impaired rotor blade becomes loose, it is adjusted to the same pitch angle as the other rotor blades and the imbalance reduces.

Determining the fourth information depending on the second information such that the maximum allowable pitch angle difference is not exceeded is, in particular, part of the first safety operation mode. In other words, the step of determining the fourth information depending on the second information such that the maximum allowable pitch angle difference is not exceeded is executed if, e.g. only if, the first information is representative of the first safety operation mode.

According to a further embodiment, if the second condition is not fulfilled, the fourth information is determined such that the pitch angle setpoint is chosen independently of the pitch angle of the at least one impaired rotor blade. In this case, the pitch angle setpoint may also be chosen independently of the second information, i.e. independently of the actual rotational speed of the rotor. For example, the pitch angle setpoint is set as fast as possible to the feathering position. In this case, aerodynamic imbalance is ignored. Determining the fourth information independently of the pitch angle of the at least one impaired rotor blade and, optionally also independently of the actual rotational speed of the rotor is, in particular, part of the second safety operation mode. In other words, the step of determining the fourth information independently of the pitch angle of the at least one impaired rotor blade and, optionally also independently of the actual rotational speed of the rotor is, executed if, e.g. only if, the first information is representative of the second safety operation mode.

According to a further embodiment, the wind turbine further comprises a generator coupled to the rotor in order to convert mechanical power into electrical power. Particularly, the generator is configured to convert the rotation of the rotor into electrical power. The generator can either be directly coupled to the rotor or indirectly via, for example, a gearbox.

According to a further embodiment, if the second condition is fulfilled, the method further comprises the step of determining tenth information depending on the second information. The tenth information is representative of a generator torque setpoint. The generator torque setpoint depends on the actual rotational speed of the rotor and is chosen to reduce the rotational speed of the rotor. Alternatively, the generator torque setpoint is chosen to reduce the rotational speed of the rotor while ensuring that a maximum allowable generator torque is not exceeded, wherein the maximum allowable generator torque depends on the actual rotational speed.

The generator torque setpoint or the maximum allowable generator torque may increase with increasing rotational speed of the rotor. For example, the generator torque setpoint or the maximum allowable generator torque is chosen to be greater than a nominal generator torque of the wind turbine. The generator torque setpoint or the maximum allowable generator torque may exceed the nominal generator torque by at least 5% and/or at most 20%, for example. By way of example, the generator torque setpoint or the maximum allowable generator torque is chosen to be greater than the nominal generator torque for a limited time, e.g. of at least 5 s. After that, the generator torque setpoint or the maximum allowable generator torque is chosen, for example, to be equal to or lower than the nominal generator torque.

According to a further embodiment, the tenth information is determined such that, when the wind turbine is operated according to the tenth information, a generator torque of the generator is adjusted to the generator torque setpoint. In other words, the tenth information is an operation information which is configured to cause an operation of the wind turbine such that the generator torque is brought to the generator torque setpoint. For example, the tenth information is sent to or determined by a generator torque adjustment system coupled to the generator in order to adjust the generator torque. For example, the generator torque adjustment system comprises a generator torque controller. For example, the generator torque adjustment system additionally comprises a generator side converter coupled to the generator, in which case the generator torque controller is (part of) a generator side converter controller. Increasing the generator torque setpoint is another measure which enables to slow down the rotor rotation. For example, this measure is used in the first safety operation mode. For example, it is not used in the second safety operation mode. Since the generator torque cannot be made arbitrarily high in order to brake the rotation of the rotor, it is particularly advantageous to additionally use the aerodynamic braking of the rotor by adjusting the pitch angles as specified above.

According to a further embodiment, the fourth and the tenth information are determined such that, when the wind turbine is operated according to the fourth and the tenth information, the adjustment of the pitch angle of the at least one movable-as-intended rotor blade to the pitch angle setpoint and the adjustment of the generator torque to the generator torque setpoint are done simultaneously. This turned out to be particularly efficient in slowing down the rotation of the rotor and, at the same time, to protect the wind turbine against damage.

According to a further embodiment, the method further comprises the step of determining fifth information which is representative of the actual pitch angles of the rotor blades. For example, the fourth information is determined depending on the fifth information. The fifth information may be determined depending on measurements. For example, incremental encoders are used to determine the positions, i.e. the pitch angles, of the rotor blades.

According to a further embodiment, determining whether the first condition is fulfilled is done depending on the fifth information and comprises a comparison of the pitch angles of the rotor blades.

According to a further embodiment, the wind turbine comprises at least three rotor blades.

According to a further embodiment, the method further comprises the step of determining sixth information depending on the fifth information, wherein the sixth information is representative of which rotor blades are synchronized in their pitch angles and which rotor blades are not synchronized with the synchronized rotor blades.

"Synchronized" herein means that the pitch angles are similar. For example, two rotor blades are synchronized if the absolute value of the difference of their pitch angles is smaller than or equal to a predefined value. For example, the predefined value is at most 0.5° or the most 1°. Accordingly, a rotor blade may be defined to be not synchronized with synchronized rotor blades if the absolute value of the difference of its pitch angle to each of the pitch angles of the synchronized rotor blades is greater than the predefined value.

According to a further embodiment, determining whether the first condition is fulfilled is done depending on the fifth and the sixth information. The first condition then comprises that the sixth information is representative of one, particularly exactly one, not synchronized rotor blade and at least two synchronized rotor blades.

According to a further embodiment, the first condition further comprises that the fifth information is representative of the pitch angle of the not synchronized rotor blade to be smaller than the pitch angle of a synchronized rotor blade. For example, the first condition comprises that the fifth information is representative of the pitch angle of the not synchronized rotor blade to be smaller than the smallest pitch angle of the synchronized rotor blades. This feature enables, inter alia, the distinction between an event in which a rotor blade is impaired from an event in which a rotor blades runs away, i.e. in which its pitch angle increases in an uncontrolled manner.

The fact that there is one not synchronized rotor blade and at least two synchronized rotor blades and that the pitch angle of the not synchronized rotor blade is smaller than the pitch angles of the synchronized rotor blades are necessary and might be sufficient for the first condition to be fulfilled. Determining whether the first condition is fulfilled depending on the fifth and the sixth information may be done by the safety controller of the wind turbine.

According to a further embodiment, the wind turbine is further operable in an IPC operation mode and a CPC operation mode. The IPC and the CPC operation modes are, for example, nominal operation modes of the wind turbine.

According to a further embodiment, the IPC operation mode is an operation mode in which the pitch angles of the rotor blades are controlled individually. In this case, the pitch angle setpoints of different rotor blades may differ from each other. This may be helpful in order avoid oscillations of the rotor or of the yaw system.

According to a further embodiment, the CPC operation mode is an operation mode in which the pitch angles of the rotor blades are all controlled collectively. In this case, the pitch angle setpoints of all rotor blades may be identical or the same pitch angle setpoint may be used for all rotor blades.

According to a further embodiment, the method further comprises the step of providing seventh information which is representative of an indication of the appearance of a failure in the pitch adjustment system. The seventh information may be determined by the turbine controller of the wind turbine. For example, the seventh information is determined depending on actually measured pitch angle(s) and the pitch angle setpoint(s).

According to a further embodiment, the method comprises the step of providing eighth information which is representative of whether the wind turbine is currently operated in the IPC operation mode or the CPC operation mode.

According to a further embodiment, the method comprises the step of generating a switch command depending on the seventh and the eighth information which is configured to cause a transition from the IPC operation mode to the CPC operation mode. For example, the switch command is generated if, e.g. only if, a fourth condition is fulfilled. The fourth condition comprises that the seventh information is representative of an indication of the appearance of a failure in the pitch adjustment system and that the eighth information is representative of the current operation mode to be the IPC operation mode.

According to further embodiment, determining the first information is executed with the wind turbine being operated in the CPC operation mode. Additionally or alternatively, determining the fifth and the sixth information is executed with the wind turbine being operated in the CPC operation mode.

Next, the computer program, the computer-readable data carrier and the control device are specified.

According to an embodiment, the computer program comprises instructions which, when the program is executed by a control device, cause the control device to carry out the method for operating a wind turbine according to any one of the embodiments described herein.

According to an embodiment, the computer-readable data carrier has the computer program stored thereon.

According to an embodiment, the control device is configured to execute the method for operating a wind turbine according to any one of the embodiments described herein. Particularly, the method is carried out when the above-mentioned computer program is executed by the control device.

The control device may comprise at least one processor and/or at least one programmable logic controller, PLC for short. The control device may be part of the wind turbine. For example, the control device comprises the turbine controller. Additionally or alternatively, the control device may comprise the safety controller. The control device may further comprise the pitch controller and/or the generator torque controller.

Next, the wind turbine is specified. The wind turbine is, in particular, configured to execute the method according to any one of the embodiments described herein. Thus, all features disclosed in connection with the method are also disclosed for the wind turbine and vice versa.

According to an embodiment, the wind turbine

**EP 4 733 577 A1**

comprises a rotor with at least two rotor blades as well as the control device according to any one of the embodiments described herein.

According to a further embodiment, the wind turbine further comprises the pitch adjustment system for adjusting the pitch angles of the rotor blades. The control device may be signally connected or connectable to the pitch adjustment system.

According to a further embodiment, the wind turbine further comprises a generator and a generator torque adjustment system for adjusting the generator torque of the generator. The control device is, for example, signally connected or connectable to the generator torque adjustment system.

Hereinafter, the method for operating a wind turbine, the control device and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.

Figure 1 shows an exemplary embodiment of the wind turbine,

Figures 2 and 3 show flowcharts of exemplary embodiments of the method,

Figures 4 to 6 show graphs illustrating exemplary embodiments of the method,

Figures 7 and 8 show further exemplary embodiments of the method,

Figure 9 shows an exemplary embodiment of a control system of the wind turbine,

Figure 10 shows a graph associated with the operation of the wind turbine.

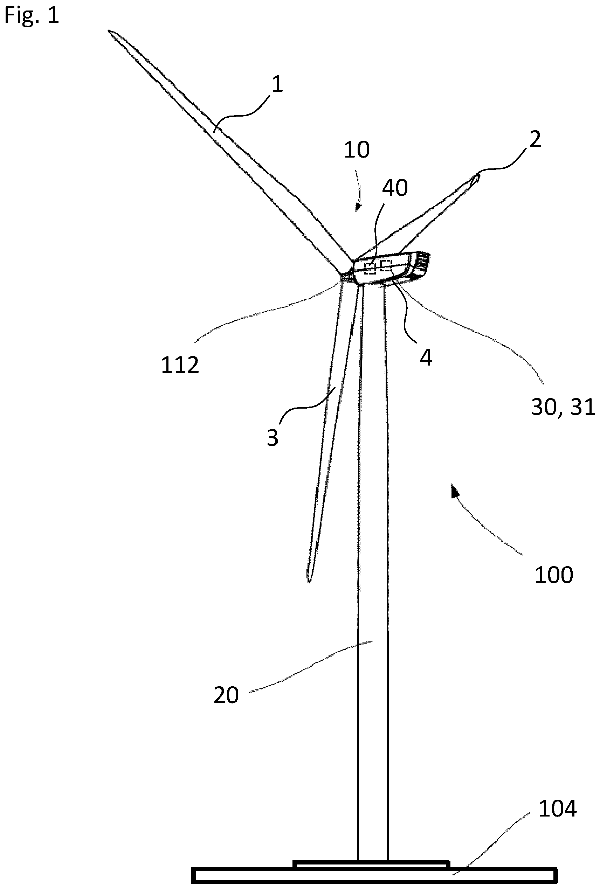

Figure 1 shows a wind turbine 100 which comprises a tower 20. The tower 20 is fixed to the ground by means of a foundation 104. A nacelle 4 is rotatably mounted at one end of the tower 20, opposite to the ground. The nacelle 4 comprises a generator 40 which is coupled to a rotor 10, e.g. via a gearbox (not shown). The rotor 10 comprises three (wind turbine) rotor blades 1, 2, 3, which are arranged on the rotor hub 112, said rotor hub 112 being connected to a rotor shaft (not shown).

During operation, the rotor 10 is set in rotation by an airflow, for example wind. This rotational movement is transmitted to the generator 40 via a drivetrain comprising, inter alia, the rotor shaft and optionally the gearbox. The generator 40 converts the mechanical energy of the rotor 10 into electrical energy.

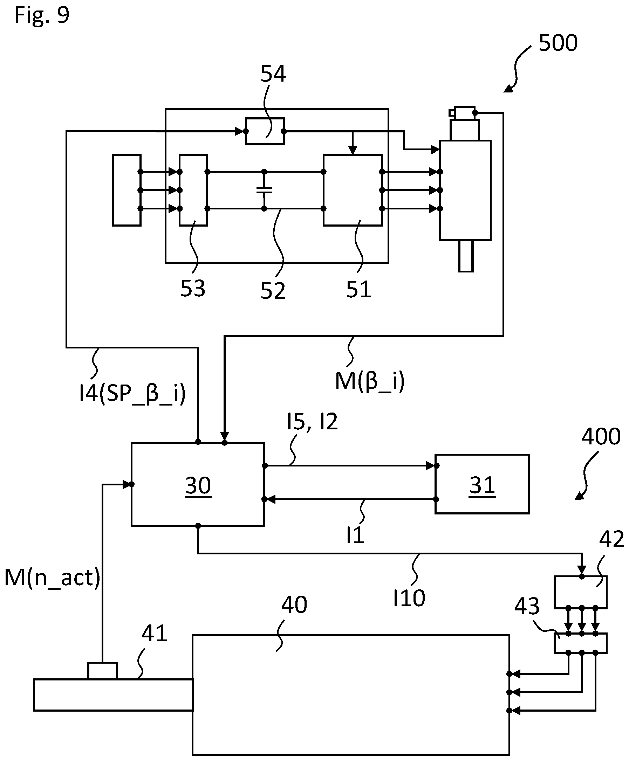

For optimizing the energy output of the wind turbine 100, the nacelle 4 has to be rotated into the wind. The pitch angles of the rotor blades 1, 2, 3 have to be set according to the wind speed. This is done with the help of drives which rotate the rotor blades 1, 2, 3 and the nacelle 4 to a respective target position. The drives for the rotor blades 1, 2, 3 are part of a pitch adjustment system which is described in more detail in connection with figure 9.

In order to control and operate the drives, the wind turbine comprises a control device 30 which determines pitch angle setpoints for the rotor blades 1, 2, 3 and a yaw angle setpoint of the nacelle 4. The control device 30 is located in the nacelle 4. The control device 30 is herein also called "turbine controller 30". The control device 30 also determines a generator torque setpoint with which the generator 40 is controlled. Not only the pitch angles of the rotor blades but also the generator torque influence the rotational speed of the rotor 10.

Additionally, a safety controller 31 is arranged in the nacelle 4. The safety controller 31 is configured to determine whether a safety operation mode is to be selected. The safety controller 31 is signally coupled with the turbine controller 30.

In case of a failure in the wind turbine 100, for example in the pitch adjustment system, it can become necessary to slow down or stop the rotation of the rotor 10. In the situation that one of the rotor blades, e.g. rotor blade 1, is stuck, impaired or hindered in its mobility, reducing the rotational speed of the rotor 10 by arbitrarily increasing the pitch angles of the remaining, movable rotor blades 2, 3 up to their feathering positions may lead to an aerodynamic imbalance which causes heavy loads on the yaw system of the wind turbine 100. On the other hand, increasing the generator torque in order to slow down the rotor rotation can only be done within certain limits so that using the generator torque alone to decelerate or stop the rotation of the rotor is not sufficient.

In order to slow down and stop the rotation of the rotor, the wind turbine 100 is operable in a first safety operation mode. This first safety operation mode is, for example, a gentle safety operation mode, in which it is tried to stop the rotation of the rotor in a gentle manner, namely by keeping the aerodynamic imbalance low. However, in some situations, this first safety operation mode may not result in a sufficiently fast reduction the rotation of the rotor. Thus, it might become necessary to choose another (second) safety operation mode.

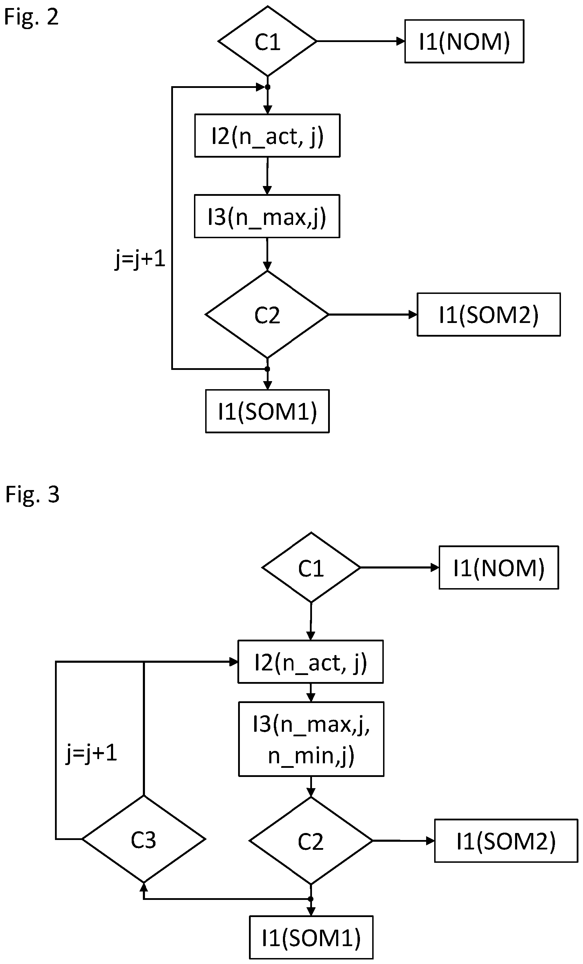

Figure 2 shows a first exemplary embodiment of the method for operating a wind turbine which helps to select the proper safety operation mode. The method works as follows: Firstly, it is determined whether a first condition C1 is fulfilled. The first condition C1 comprises that a failure appears in the wind turbine 100 during rotation of the rotor 10. If the first condition C1 is not fulfilled, first information I1 is determined to be representative of a nominal operation mode NOM. The first information I1 then causes an operation of the wind turbine in the nominal operation mode NOM. The nominal operation mode NOM may be an operation mode optimized for energy production.

If, however, the first condition C1 is fulfilled, second information I2 is provided which is representative of the actual rotational speed n_act,j of the rotor 10. The second information I2 is, for example, determined depending on measurements. Moreover, third information I3 is provided which is representative of a maximum allowable rotational speed n_max,j of the rotor 10.

As can be seen in figure 1, providing or determining the second I2 and third I3 information may be done repeatedly. The index "j" stands for the number of the current iteration step or the for the number of current repetition. When the actual rotational speed is determined for the first time after starting the method or after determining that first condition C1 is fulfilled, j is set to 0. For example, the maximum allowable rotational speed n_max,0 is then initiated to be the actual rotational speed n_act,0 plus an offset value n_off.

After providing the second I2 and the third I3 information, it is determined whether a second condition C2 is fulfilled depending on the second I2 and the third I3 information. The second condition C2 comprises that the actual rotational speed n_act,j is smaller than the maximum allowable rotational speed n_max,j.

If the second condition C2 is fulfilled, the first information I1 is determined to be representative of the first safety operation mode SOM1. Moreover, the index j is increased by 1 and the second I2 as well as the third I3 information are redetermined or newly determined, respectively. The time interval Δ*t* for increasing j by 1, i.e. the iteration step length, is, for example, 10 ms. For example, in the case of j=1, the third information I3 is determined such that the maximum allowable rotational speed n_max,1 is smaller than the previous maximum allowable rotational speed n_max,0.

If the second condition C2 is not fulfilled, this is an indication that the rotation of the rotor does not decrease sufficiently fast. It may then be too dangerous to continue operating the wind turbine in the first safety operation mode SOM1. Therefore, the first information I1 is determined to be representative of a second safety operation mode SOM2. The second safety operation mode SOM2 uses, for example, different measures for reducing the speed of the rotor than the first safety operation mode SOM1. For example, the second safety operation mode SOM2 increases the pitch angles of the rotor blades independently of any aerodynamic balance up to the feathering positions. The generator is, for example, not used for slowing down the rotation of the rotor in the second safety operation mode SOM2.

Figure 3 shows a second exemplary embodiment of the method for operating a wind turbine. It is similar to the method of figure 2 but, additionally, it is now checked whether a third condition C3 is fulfilled. The third condition C3 comprises that the second I2 and the third I3 information are representative of the actual rotational speed n_act,j to be larger than a reference rotational speed n_min,j. The reference rotational speed n_min,j is the maximum allowable rotational speed n_max,j minus an offset value n_off. It may be the same offset value n_off as used for initializing the maximum allowable rotational speed n_max,0.

If the second condition C2 and the third condition C3 are fulfilled, this is an indication that the rotational speed of the rotor decreases in an expected manner. The index j is increased by 1 to j+1 and the second I2 and third I3 information are newly determined. Thereby, the maximum allowable rotational speed n_max,j+1 is determined to be smaller than the previous maximum allowable rotational speed n_max,j. For example, a constant slope $\frac{dn}{dt}$ of 0.1 rpm/s may be used for the reduction so that

$$n_{max,j+1} = n_{max,j} - \frac{dn}{dt} * \Delta t$$

If, however, the second condition C2 is fulfilled and the third condition C3 is not fulfilled, this is an indication that the actual rotational speed n_act decreases faster than expected. In this case, the index j is also increased by 1 to j+1, but the newly determined maximum allowable rotational speed n_max,j+1 is calculated differently, namely is calculated to be the actual rotational speed n_act,j+1 plus an offset value, e.g. the above-mentioned offset value n_off. In this way, the maximum allowable rotational speed n_max is forced to follow the shape of the actual rotational speed n_act (fast follow procedure).

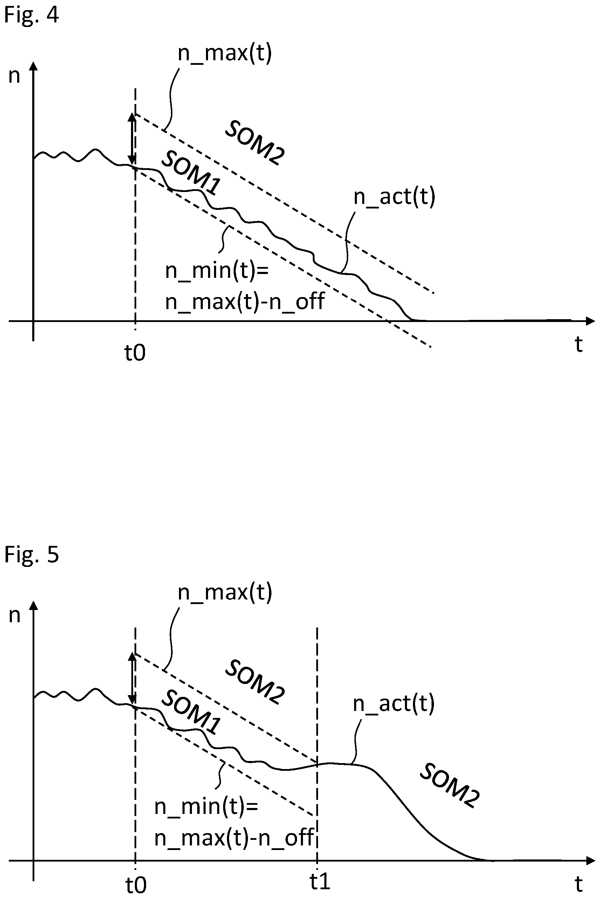

Figures 4 to 6 show graphs illustrating the different scenarios mentioned in connection with figures 2 and 3. The y-axis is the rotational speed n of the rotor and the x-axis is the time t. The solid lines in each case show the actual rotational speed n_act(t) as a function of time t. The dashed curves show the maximum allowable rotational speed n_max(t) as a function of time t and the reference rotational speed n_min(t) as a function of time t.

In figure 4, the vertical dashed line indicates the time t0 at which a failure appears in the wind turbine and at which the first condition C1 is fulfilled. Accordingly, the maximum allowable rotational speed n_max(t0) (which is n_max,0) is initiated to be the actual rotational speed n_act(t0) (which is n_act,0) plus the offset value n_off. Moreover, the first information I1 is determined to be representative of the first safety operation mode SOM1 and, accordingly, the wind turbine is operated in the first safety operation mode SOM1, which reduces the rotational speed of the rotor. It is now repeatedly checked whether the actual rotational speed n_act(t) is within the interval defined by the maximum rotational speed n_max(t) and the reference rotational speed n_min(t) which is the maximum rotational speed n_max(t) minus the offset value n_off (see parallel dashed lines). Since the actual rotational speed n_act(t) stays within the interval, the wind turbine is continued to be operated in the first safety operation mode SOM1. The maximum allowable rotational speed n_max(t) and, accordingly, the reference rotational speed n_min(t) continuously decrease. The first safety operation mode SOM1 is maintained until the rotation of the rotor is stopped.

In figure 5, the method is started in the same way as in figure 4. However, the first safety operation modes SOM1 is not maintained until the rotation of the rotor is stopped since, at a certain time t1, indicated by the second vertical dashed line, the actual rotational speed n_act(t1) raises above the maximum allowable rotational speed n_max(t1). At this moment t1, the first information I1 is determined to be representative of the second safety operation mode SOM2 and, accordingly, the wind turbine is operated in the second safety operation mode SOM2. With this second safety operation mode SOM2, the rotation of the rotor is finally stopped.

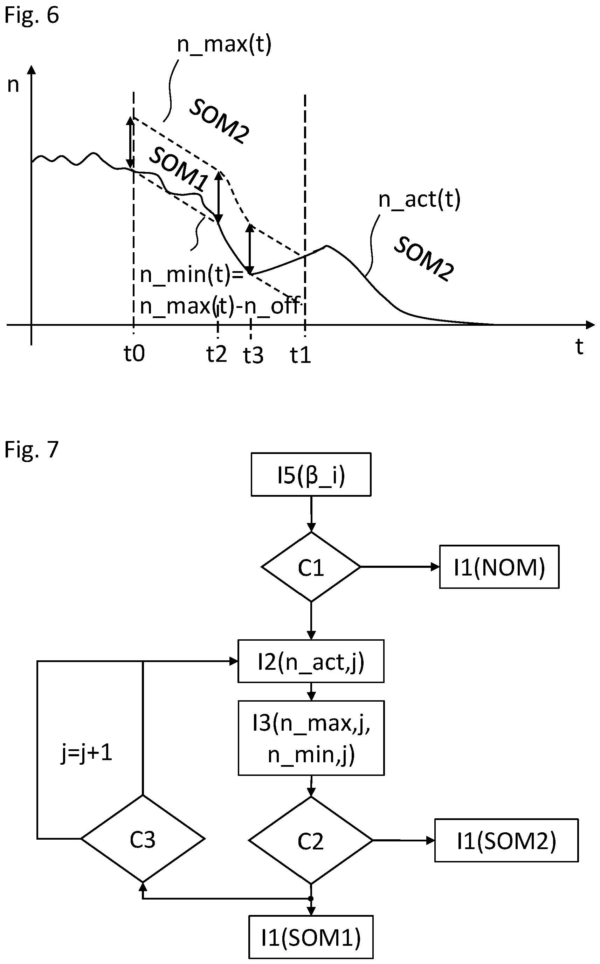

Figure 6 shows a situation in which the method is started in the same way as in figures 4 and 5. However, at a certain moment t2, the actual rotational speed falls below or becomes equal to the reference rotational speed n_min(t), and, accordingly, the third condition C3 is no longer fulfilled. Consequently, the fast follow procedure is initiated. In this fast follow procedure, the maximum allowable rotational speed n_max(t) is set to be the actual rotational speed n_act(t) plus the offset value n_off. The actual rotational speed n_act(t) keeps on decreasing and the maximum allowable rotational speed n_max(t) follows. The fast follow procedure is continued until, suddenly, the actual rotational speed n_act(t) starts to increase again. At this moment t3, the fast follow procedure is ended and the maximum allowable rotational speed n_max(t) is again determined as before. Later on, at time t1, indicated by the vertical dashed line, the actual rotational speed n_act(t) raises above the maximum allowable rotational speed n_max(t). From this moment t1 on, operation in the first safety operation mode SOM1 is stopped and operation in the second safety operation mode SOM2 is executed, which finally causes a stop of the rotation of the rotor.

Figure 7 shows a further exemplary embodiment of the method for operating the wind turbine. It is similar to the method shown in figure 3. The failure in the wind turbine is a fault event in the pitch adjustment system in which at least one of the rotor blades is impaired in its mobility and the other rotor blades are still movable as intended. Whether the first condition C1 is fulfilled is done depending on fifth information I5 which is, for example, determined depending on measurements and which is representative of the actual pitch angles $\beta\_1$ of the rotor blades. Depending on the fifth information I5, it can be determined whether one of the rotor blades is impaired or stuck.

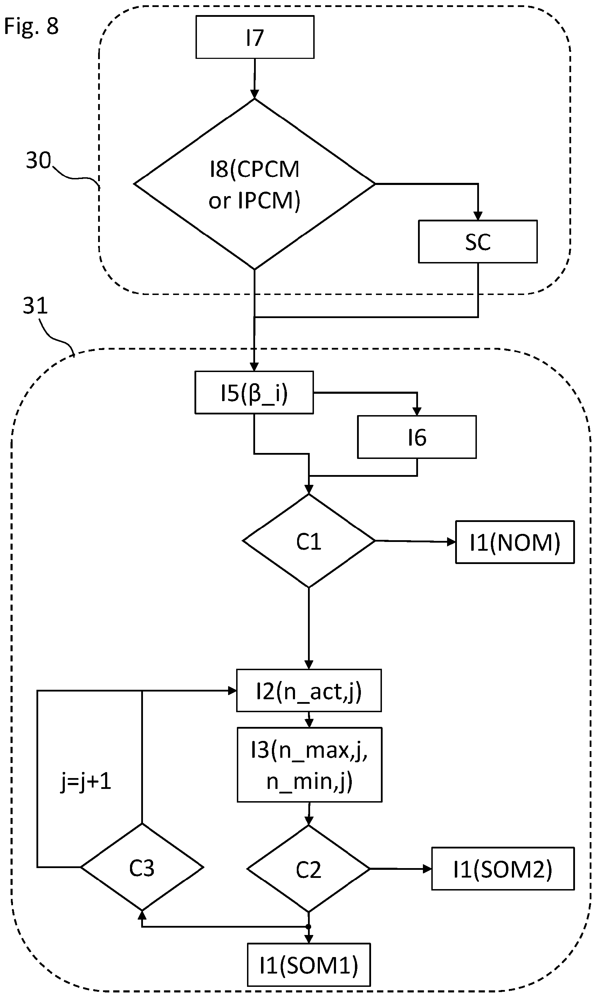

In the exemplary embodiment of the method of figure 8, sixth information I6 is determined depending on the fifth information I5. The sixth information I6 is representative of which rotor blades are synchronized and which rotor blade is not synchronized with the synchronized rotor blades. The first condition C1 comprises that the sixth information I6 is representative of exactly one not synchronized rotor blade and at least two synchronized rotor blades and that the fifth information I5 is representative of the pitch angle of the not synchronized rotor blade to be smaller than the smallest pitch angle of the synchronized rotor blades.

In figure 8, before determining whether the first condition C1 is fulfilled, seventh information I7 is provided which is representative of an indication of the appearance of a failure in the pitch adjustment system. In contrast to the determination of whether the first condition C1 is fulfilled, which is done by the safety controller 31 (see also figure 1), the seventh information I7 is determined by the turbine controller 30. The turbine controller 30 further provides eighth information I8 which is representative of whether the wind turbine 100 is currently operated in an IPC operation mode IPCM or a CPC operation mode CPCM. In the case that the current operation mode is the IPC operation modes, a switch command SC is generated depending on the seventh I7 and eighth I8 information, said switch command SC being configured to cause a transition from the IPC operation mode to the CPC operation mode. After the switch, the safety controller 31 starts to determine whether the first condition C1 is fulfilled.

The methods describe in connection with figures 2 to 8 may be computer-implemented. For example, they are implemented in a computer program such that the computer program comprises instructions which, when executed by a control system, e.g. the control system of figure 9, cause the control system to execute the methods. The computer program can be stored on a computer-readable data carrier. Accordingly, figures 2 to 8 likewise show exemplary embodiments of the computer program and the computer-readable data carrier.

Figure 9 shows an exemplary embodiment of a control system for a wind turbine. This system may be used in the wind turbine 100 of figure 1. The control system comprises the turbine controller 30, the safety controller 31, the generator 40, a drive train 41 coupled to the generator 40, a generator torque adjustment system 400 and a pitch adjustment system 500. The generator torque adjustment system 400 comprises a generator torque controller 42 and a generator side converter 43 coupled to the generator 40. The generator torque controller 42 is (part of) a generator side converter controller and is configured to adjust the generator torque of the generator 40. The generator controller 42 receives tenth information I10 which is representative of the generator torque setpoint from the turbine controller 30. A sensor, e.g. an incremental encoder, is coupled to the drive train 41 and provides measurements M(n_act) to the turbine controller 30. The measurements M(n_act) are representative of the actual rotational speed n_act of the rotor. The second information I2 being representative of the actual rotational speed n_act is then sent to the safety controller 31.

The pitch adjustment system 500 comprises a pitch drive 50 for each rotor blade (only one of the drives 50 is shown in Figure 9). The pitch drive 50 is coupled to a motor side converter 51. The motor side converter 51 is coupled to a grid side converter 53 via a DC link intermediate circuit 52. Power from an electric grid is transmitted to the pitch drive 50 via the grid side converter 53, the DC link intermediate circuit 52 and the motor side converter 51. The pitch adjustment system 500 further comprises a pitch controller 54 which receives fourth information I4, which is representative of a pitch angle setpoint SP_β_i, from the turbine controller 30 and controls the pitch drives 50 according to the pitch angle setpoint SP_β_1. A sensor, e.g. an incremental encoder, is assigned to each of the pitch drives 50. The measurements of the sensor can be used to determine the actual pitch angles β_1 of the rotor blades. The measurements M(β_1) are sent to the turbine controller 30. The turbine controller 30 may determine the fifth information I5 depending on the measurements M(β_1) and sent them to the safety controller 31.

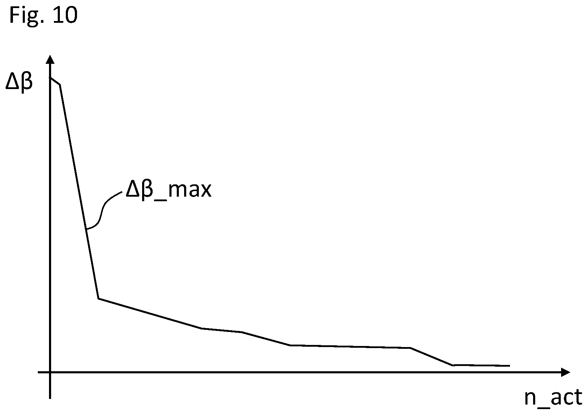

When the failure in the wind turbine is a fault event in which one rotor blade 1 is impaired or stuck, and, if the wind turbine is operated in the first safety operation mode SOM1, the turbine controller 30 determines the fourth information I4 such that the rotor rotation is decelerated and, at the same time, the difference Δβ between the pitch angle setpoint SP_β_i for the movable-as-intended rotor blades 2, 3 and the pitch angle β_1 of the at least one impaired rotor blade 1 is lower or equal to a maximum allowable pitch angle difference Δβ_max, wherein the maximum allowable pitch angle difference Δβ_max depends on the actual rotational speed n_act. For example, the maximum allowable pitch angle difference Δβ_max decreases with increasing actual rotational speed n_act (see figure 10). In this way, the aerodynamic imbalance and, accordingly, the load on the yaw system can be kept comparably low during slowdown of the rotor rotation.

Moreover, in the first safety operation mode SOM1, the generator controller 42 is used to slow down the rotor rotation. The generator torque setpoint of the tenth information I10 depends on the actual rotational speed n_act of the rotor 10 and is chosen to reduce the rotational speed of the rotor 10. Alternatively, the generator torque setpoint is chosen such that it reduces the rotational speed n_a of the rotor 10 while ensuring that a maximum allowable generator torque is not exceeded, wherein the maximum allowable generator torque depends on the actual rotational speed n_act.

Adjusting the pitch angels and adjusting the torque of the generator controller in order to slow down the rotor may be done simultaneously in the first safety operation mode SOM1.

For example, in the second safety operation mode SOM2, the rotor is only slowed down by means of the adjustment of the pitch angles, particularly without considering the aerodynamic imbalance, e.g. without defining a maximum allowed pitch angle difference. The generator controller is not used for deceleration.

Reference sign list:

| 1, 2, 3 | rotor blades |
|---|---|
| 4 | nacelle |
| 10 | rotor |
| 20 | tower |
| 30 | control device / turbine controller |
| 31 | control device / safety controller |
| 40 | generator |
| 41 | drive train |
| 42 | generator torque controller |
| 43 | generator side converter |
| 50 | pitch drive |
| 51 | motor side converter |
| 52 | DC link intermediate circuit |
| 53 | grid side converter |
| 54 | pitch controller |
| 100 | wind turbine |
| 104 | foundation |
| 112 | rotor hub |
| 400 | generator torque adjustment system |
| 500 | pitch adjustment system |

| C1 | first condition |
|---|---|
| C2 | second condition |
| C3 | third condition |

| I1 | first information |
|---|---|
| I2 | second information |
| I3 | third information |
| I4 | fourth information |
| I5 | fifth information |
| I6 | sixth information |
| I7 | seventh information |
| I8 | eighth information |
| I9 | ninth information |
| I10 | tenth information |

| n_act | actual rotational speed |
|---|---|
| n_max | maximum allowable rotation speed |
| n_min | reference rotational speed |
| n_off | offset value |
| j | index / number of iteration step / number of repetition |
| n | rotational speed |
| t | time |
| t0 to t3 | moments in time |

β_1       pitch angle
SP_β_i    pitch angle setpoint
Δβ        difference
Δβ_max    maximum allowable pitch angle difference

SOM1    (first) safety operation mode
SOM2    second/further safety operation mode
NOM     nominal operation mode
SC      switch command
IPCM    IPC operation mode
CPCM    CPC operation mode

M(n_a)    measurements
M(β_1)    measurements

**Claims**

1. Method for operating a wind turbine (100) having a rotor (10) with at least one rotor blade (1, 2, 3), wherein the wind turbine (100) is operable in a safety operation mode (SOM1) which is configured to slow down the rotation of the rotor (10), wherein, in the method, first information (I1) is representative of the operation mode in which the wind turbine (100) is to be operated and wherein the method comprises:

   - determining whether a first condition (C1) is fulfilled, wherein the first condition (C1) comprises that a failure appears in the wind turbine (100) during rotation of the rotor (10); and, if the first condition (C1) is fulfilled,
   - providing second information (12) which is representative of the actual rotational speed (n_act,j) of the rotor (10);
   - providing third information (I3) which is representative of a maximum allowable rotational speed (n_max,j) of the rotor (10) ;
   - determining whether a second condition (C2) is fulfilled depending on the second (I2) and the third (I3) information, said second condition (C2) comprising that the actual rotational speed (n_act,j) is at most the maximum allowable rotational speed (n_max,j); and, if the second condition (C2) is fulfilled,
   - determining the first information (I1) to be representative of the safety operation mode (SOM1).

2. Method according to claim 1, wherein the method further comprises:

   - if the first condition (C1) and the second condition (C2) are fulfilled,

      - newly providing the third information (I3) such that it is representative of a maximum allowable rotational speed (n_max,j+1) which is different from the previous maximum allowable rotational speed (n_max,j),
      - newly providing the second information (I2);

   - determining whether the second condition (C2) is fulfilled depending on the newly determined second (I2) and the newly determined third (I3) information,
   - repeating the steps of newly determining the second (I2) and third (I3) information as long as the first condition (C1) and the second condition (C2) are fulfilled and until the second information (I2) becomes representative of a stop of the rotor rotation.

3. Method according to claim 1 or 2, wherein

   - if the second condition (C2) and a third condition (C3) are fulfilled, the third information (I3) is newly determined such that the maximum allowable rotational speed (n_max,j+1) is smaller than the previous maximum allowable rotational speed (n_max,j),
   - the third condition (C3) comprises that the second (I2) and third (I3) information are representative of the actual rotational speed (n_act,j) being larger than a reference rotational speed (n_min,j), wherein the reference rotational speed (n_min,j) is the maximum allowable rotational speed (n_max,j) minus an offset value (n_off).

4. Method according to claim 3, wherein

   - if the second condition (C2) is fulfilled and the third condition (C3) is not fulfilled, the third information (I3) is newly determined such that the maximum allowable rotational speed (n_max,j+1) is the actual rotational speed (n_act,j) plus the offset value (n_off).

5. Method according to any one of the preceding claims, wherein

   - the safety operation mode (SOM1) is configured to slow down the rotation of the rotor (10) up to a stop of the rotor rotation,
   - the wind turbine is at least operable in a further safety operation mode (SOM2) which is also configured to slow down the rotation of the rotor (10) up to a stop of the rotor rotation,
   - if the first condition (C1) is fulfilled and the second condition (C2) is not fulfilled, the first information (I1) is determined to be representative of the further safety operation mode (SOM2),
   - the safety operation mode (SOM1) and the further safety operation mode (SOM2) use different measures or a different combination of measures for slowing down the rotation of the rotor (10),
- the first information (I1) is maintained to be representative of the safety operation mode (SOM1) or the further safety operation mode (SOM2) until rotation of the rotor is stopped.

6. Method according to any one of the preceding claims, wherein

    - the wind turbine (100) comprises at least two rotor blades (1, 2, 3),
    - the wind turbine (100) comprises a pitch adjustment system (500) for adjusting the pitch angles ($\beta\_i$) of the at least two rotor blades (1, 2, 3),
    - the failure in the wind turbine (100) is a fault event in the pitch adjustment system (500) in which at least one of the rotor blades (1) is impaired in its mobility and at least one other rotor blade (2, 3) is still movable as intended.

7. Method according to claim 6, further comprising

    - determining fourth information (I4), wherein the fourth information (I4) is representative of a pitch angle setpoint (SP_$\beta\_i$), wherein the pitch angle setpoint (SP_$\beta\_i$)

        - is for the at least one movable-as-intended rotor blade (2, 3),
        - is chosen to reduce the rotational speed of the rotor (10),

    - so that, when the wind turbine (100) is operated according to the fourth information (I4), a pitch angle ($\beta\_i$) of at least one movable-as-intended rotor blade (1, 2, 3) is adjusted to the pitch angle setpoint (SP_$\beta\_i$); wherein
    - if the second condition (C2) is fulfilled, the fourth information (I4) is determined depending on the second information (I2) such that the difference ($\Delta\beta$) between the pitch angle setpoint (SP_$\beta\_i$) and the pitch angle ($\beta\_1$) of the at least one impaired rotor blade (1) is lower or equal to a maximum allowable pitch angle difference ($\Delta\beta\_max$), wherein the maximum allowable pitch angle difference ($\Delta\beta\_max$) depends on the actual rotational speed (n_act,j).

8. Method according to claim 7 in its dependency of claim 5, wherein

    - if the second condition (C2) is not fulfilled, the fourth information (I4) is determined such that the pitch angle setpoint (SP_$\beta\_i$) is chosen independently of the pitch angle ($\beta\_1$) of the at least one impaired rotor blade (1).

9. Method according to any of claims 6 to 8, wherein the method comprises the steps of

    - providing fifth information (I5) which is representative of the actual pitch angles ($\beta\_i$) of the rotor blades (1, 2, 3); wherein

        - determining whether the first condition (C1) is fulfilled is done depending on the fifth information (I5) and comprises a comparison of the pitch angles ($\beta\_i$) of the rotor blades (1, 2, 3).

10. Method according to claim 9, wherein

    - the wind turbine (100) comprises at least three rotor blades (1, 2, 3), wherein the method further comprises:
    - determining sixth information (I6) depending on the fifth information (I5), wherein the sixth information (I6) is representative of which rotor blades (2, 3) are synchronized in their pitch angles ($\beta\_i$) and which rotor blades (1) are not synchronized with the synchronized rotor blades (2, 3);
    - determining whether the first condition (C1) is fulfilled is done depending on the fifth (I5) and sixth (I6) information and comprises

        - that the sixth information (I6) is representative of one not synchronized rotor blade (1) and at least two synchronized rotor blades (2, 3), and
        - that the fifth information (I5) is representative of the pitch angle ($\beta\_1$) of the not synchronized rotor blade (1) to be smaller than a pitch angle ($\beta\_2$, $\beta\_3$) of a synchronized rotor blade (2, 3).

11. Method according to anyone of claims 6 to 10, wherein

    - the wind turbine (100) is further operable in an IPC operation mode (IPCM) and a CPC operation mode (CPCM),
    - the IPC operation mode (IPCM) is an operation mode in which the pitch angles ($\beta\_i$) of the rotor blades (1, 2, 3) are controlled individually,
    - the CPC operation mode (CPCM) is an operation mode in which the pitch angles ($\beta\_i$) of the rotor blades (1, 2, 3) are controlled collectively,
    - the method further comprises:

        - providing seventh information (I7) which is representative of an indication of the appearance of a failure in the pitch adjustment system,
- providing eighth information (I8) which is representative of whether the wind turbine (100) is currently operated in the IPC operation mode (IPCM) or the CPC operation mode (CPCM),
- generating a switch command (SC) depending on the seventh (I7) and eighth (I8) information which is configured to cause a transition from the IPC operation mode (IPCM) to the CPC operation mode (CPCM), wherein
- determining the first information (I1) and/or determining the fifth (I5) and the sixth (I6) information is executed with the wind turbine (100) being operated in the CPC operation mode.

12. Computer program comprising instructions which, when the program is executed by a control device, cause the control device to carry out the method of any one of claims 1 to 11.

13. Computer-readable data carrier having the computer program of claim 12 stored thereon.

14. Control device (30, 31) which is configured to execute the method according to any one of claims 1 to 11.

15. Wind turbine (100) comprising

- a rotor (10) with at least two rotor blades (1, 2, 3),
- the control device (30, 31) according to claim 14.

Fig. 1

**Fig. 2**

**Fig. 3**

Fig. 4

Fig. 5

Fig. 6

Fig. 7

Fig. 8

Fig. 9

Fig. 10

Europäisches
Patentamt

European
Patent Office

Office européen
des brevets

## EUROPEAN SEARCH REPORT

**Application Number**

EP 24 20 9037

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 108 825 A2 (GEN ELECTRIC [US]) 14 October 2009 (2009-10-14) * paragraphs [0006] - [0009], [0020] - [0026]; figure 4 * ----- | 1-15 | INV. F03D7/02 |
| X | EP 3 699 421 A1 (GEN ELECTRIC [US]) 26 August 2020 (2020-08-26) * paragraphs [0003], [0006] - [0012], [0016], [0017], [0025] - [0031]; figures 4-6 * ----- | 1-15 | |

**TECHNICAL FIELDS SEARCHED (IPC)**

F03D

The present search report has been drawn up for all claims

| Place of search | Date of completion of the search | Examiner |
|---|---|---|
| The Hague | 3 April 2025 | Libeaut, Laurent |

EPO FORM 1503 03.82 (P04C01)

EP 4 733 577 A1

## ANNEX TO THE EUROPEAN SEARCH REPORT
## ON EUROPEAN PATENT APPLICATION NO.

EP 24 20 9037

03-04-2025

| Patent document cited in search report | | Publication date | Patent family member(s) | | Publication date |
|---|---|---|---|---|---|
| EP 2108825 | A2 | 14-10-2009 | CN | 101550908 A | 07-10-2009 |
| | | | DK | 2108825 T3 | 01-08-2016 |
| | | | EP | 2108825 A2 | 14-10-2009 |
| | | | US | 2009243295 A1 | 01-10-2009 |
| EP 3699421 | A1 | 26-08-2020 | CN | 111577545 A | 25-08-2020 |
| | | | DK | 3699421 T3 | 13-02-2023 |
| | | | EP | 3699421 A1 | 26-08-2020 |
| | | | ES | 2939054 T3 | 18-04-2023 |
| | | | US | 2020263662 A1 | 20-08-2020 |

EPO FORM P0459

For more details about this annex : see Official Journal of the European Patent Office, No. 12/82